# EUROPÄISCHE PATENTSCHRIFT

(11) **EP 2 945 832 B1**
(45) Veröffentlichungstag und Bekanntmachung des Hinweises auf die Patenterteilung: **01.11.2017**
(21) Anmeldenummer: 13826923.8
(22) Anmeldetag: 21.12.2013
(51) Int. Cl.: B62D 1/04

(54) **LENKRAD MIT OPTISCHEM FINGERNAVIGATIONSMODUL**
STEERING WHEEL WITH OPTICAL FINGER NAVIGATION MODULE
VOLANT POURVU D'UN MODULE DE NAVIGATION AU DOIGT À FONCTIONNEMENT OPTIQUE

(30) Priorität: 19.01.2013 DE 102013000927
(43) Veröffentlichungstag der Anmeldung: 25.11.2015
(73) Patentinhaber: Daimler AG, 70327 Stuttgart (DE)
(72) Erfinder: ENTENMANN, Volker, 71563 Affalterbach (DE); GRANSE, Karsten, 75378 Bad Liebenzell (DE)
(74) Vertreter: JENSEN & SON
(86) Internationale Anmeldenummer: PCT/EP2013/003934
(87) Internationale Veröffentlichungsnummer: WO 2014/111122

(56) Entgegenhaltungen:
- DE-A1-102009 038 333
- US-B1- 6 373 472

## Beschreibung

Die vorliegende Erfindung betrifft ein Lenkrad für ein Kraftfahrzeug mit einem ersten und einem zweiten Steuerungsmodul, wobei das erste Steuerungsmodul ein optisches Fingernavigationsmodul als erstes Steuerungselement aufweist, und das zweite Steuerungsmodul ein zweites Steuerungselement aufweist, und wobei das erste Steuerungselement eine Bedienfläche in einer bestimmten Ebene aufweist.

Aus der Druckschrift DE 10 2009 030 592 A1 ist eine Bedieneinrichtung für ein Multifunktionsgerät in einem Kraftfahrzeug bekannt. Die Bedieneinrichtung weist ein Betätigungselement auf, das eine berührungssensitive Bedienfläche umfasst. Einem Benutzer wird eine haptische Rückmeldung bei der Bedienung des Multifunktionsgeräts gegeben. Dies wird durch eine spezifische Lagerung des Betätigungselements bewirkt, indem sich das Betätigungselement aus einer Ausgangslage heraus in wenigstens einem Freiheitsgrad rückstellbar verlagern lässt. Die Verlagerung erfolgt beispielsweise durch einen spürbaren mechanischen Druck mit einem Finger des Benutzers auf das Betätigungselement. Wird das Betätigungselement gegen das wenigstens eine Schaltelement gedrückt, wird das Schaltelement im eingebauten und angeschlossenen Zustand aktiviert und löst ein auswertbares elektrisches Signal aus.

Die US 6 373 472 B1 offenbart ein Lenkrad mit einer größeren Anzahl von Schaltern und einem Touchscreen, der zur Eingabe von Befehlen und zur Ausgabe von grafischen Anzeigen vorgesehen ist. Der Touchscreen ist im Bereich der Prallfläche, die Schalter im Bereich der Speichen des Lenkrades angeordnet.

Aus der DE 10 2009 038 333 A1 ist ein Lenkrad gemäß dem Oberbegriff des Anspruchs 1 mit einem als optischer Joystick ausgeführten Touchpad und einem weiteren Steuerungselement bekannt. Das Steuerungselement weist eine Bedienfläche in einer ersten Ebene auf, das Touchpad ist im Sinne einer besseren Bedienbarkeit in einer von der ersten Ebene verschiedenen Ebene angeordnet.

Sind auf dem Lenkrad mehrere Bedienelemente angeordnet, so sind spezielle Maßnahmen zu ergreifen, dass Fehlauslösungen vermieden werden. Der Fahrer des Kraftfahrzeugs sollte bei der Bedienung der Bedienelemente nämlich nicht darauf angewiesen sein, die Bedienelemente optisch mit seinen Augen zu erfassen. Vielmehr sollte eine Bedienung von Steuerungselementen des Lenkrads auch dann fehlerfrei möglich sein, wenn der Fahrer seinen Blick nicht vom Straßenverkehr abwendet.

Die Aufgabe der vorliegenden Erfindung besteht somit darin, ein Lenkrad vorzuschlagen, dessen Steuerungselemente sicherer bedienbar sind.

Erfindungsgemäß wird diese Aufgabe gelöst durch die Merkmale der unabhängigen Ansprüche gelöst.

Vorteilhafte Weiterbildungen der Erfindung sind in den abhängigen Ansprüchen angegeben.

Erfindungsgemäß wird also bereitgestellt ein Lenkrad für ein Kraftfahrzeug mit einem ersten und einem zweiten Steuerungsmodul, wobei das erste Steuerungsmodul ein optisches Fingernavigationsmodul als erstes Steuerungselement aufweist, das zweite Steuerungsmodul ein zweites Steuerungselement aufweist, und das erste Steuerungselement eine Bedienfläche in einer ersten Ebene aufweist, und wobei das zweite Steuerungselement eine Bedienfläche in einer von der ersten Ebene verschiedenen, vorzugsweise in einer gegenüber der ersten Ebene geneigten zweiten Ebene aufweist.

In vorteilhafter Weise besitzt das Lenkrad also Steuerungselemente, deren Bedienflächen in unterschiedlichen Ebenen, welche vorzugsweise zueinander geneigt sind, angeordnet sind. Insbesondere ist also die Bedienfläche eines optischen Fingernavigationsmoduls von der Bedienfläche eines anderen Steuerungselements, z. B. eines Tasters verschieden. Der Fahrer kann also die unterschiedlichen Steuerungselemente bzw. Steuerungsmodule rein haptisch unterscheiden und das optische Navigationsmodul zuverlässig finden. Erfindungsgemäß besitzt das erste Steuerungsmodul ein drittes Steuerungselement, welches zu der Rotationsachse des Lenkrads einen größeren Abstand besitzt als das erste Steuerungselement. Dies bedeutet, dass das dritte Steuerungselement am Lenkrad radial weiter außen sitzt als das erste Steuerungselement. Wenn der Daumen vom Lenkradrand nach innen zu dem optischen Steuerungselement gleitet, überstreicht er gegebenenfalls das dritte Steuerungselement, das weiter außen liegt. Da das optische Steuerungselement also radial innen liegt, ist die Wahrscheinlichkeit, dass es versehentlich mit dem Daumen überstrichen wird, geringer als in dem Fall, dass das optische bzw. berührungssensitive Bedienelement außen liegt.

Das erste und dritte Steuerungselement können im Wesentlichen auf einer Geraden, welche parallel zu einer Geraden durch die Rotationsachse des Lenkrads verschoben ist, angeordnet sein. Dadurch lassen sich die Steuerungselemente beispielsweise mit dem Daumen leicht erreichen. Sie sind aber durch die Neigung und/oder Positionierung leicht voneinander oder von anderen Steuerungselementen unterscheidbar.

Speziell kann das dritte Steuerungselement einen Taster umfassen. Derartige Taster sind durch Druck senkrecht auf die Bedienfläche betätigbar, während das optische Fingernavigationsmodul als berührungssensitives Element durch Wischen entlang der Bedienfläche auslösbar bzw. aktivierbar ist. Auch dies stellt ein haptisches Unterscheidungsmerkmal dar.

Entsprechend einer weiteren Ausgestaltung kann ein weiteres Steuerungsmodul an dem Lenkrad symmetrisch zu dem ersten oder zweiten Steuerungsmodul bezüglich einer Ebene durch die Rotationsachse des Lenkrads angeordnet sein. Dies führt dazu, dass in vorteilhafter Weise auf beiden Seiten des Lenkrads Steuerungsmodule sicher und zuverlässig durch den jeweiligen Daumen des Fahrers des Kraftfahrzeugs erreicht werden können.

Des Weiteren kann jedes der Steuerungsmodule mehrere Steuerungselemente aufweisen. Dadurch lassen sich Funktionsinseln definieren, die der Fahrer leicht erreichen und systematisch in ihrer Funktion trennen kann.

Weiterhin kann das erste Steuerungselement berührungssensitiv sein. Zum Auslösen eines elektrischen Signals genügt es daher, wenn der Fahrer die Bedienfläche des Steuerungselements einfach berührt.

Des Weiteren kann das erste Steuerungselement zum Erfassen einer Bewegung eines Fingers des Fahrers des Kraftfahrzeugs ausgebildet sein. In vorteilhafter Weise wird also nicht nur eine Berührung erfasst, sondern es wird eine Bewegung erfasst, in ein Steuersignal umgewandelt und ausgewertet.

Besonders vorteilhaft ist, wenn ein Kraftfahrzeug und insbesondere ein Automobil mit dem oben beschriebenen Lenkrad ausgestattet ist.

Die vorliegende Erfindung wird nun anhand der beigefügten Zeichnungen näher erläutert, in denen zeigen:
- Fig. 1: eine schematische Darstellung eines Lenkrads mit optischem Fingernavigationsmodul bzw. OFN;
- Fig. 2: eine Skizze einer Bedienbewegung bei mehreren Steuerungselementen;
- Fig. 3: eine Draufsicht auf Steuerungsmodule für ein Lenkrad;
- Fig. 4: einen Schnitt durch Steuerungsmodule von Fig. 3;
- Fig. 5: eine Wischbewegung zum Bedienen eines optischen Fingernavigationsmoduls;
- Fig. 6: eine weitere Wischbewegung senkrecht zu der Wischbewegung von Fig. 5 und
- Fig. 7: eine Drückbewegung eines Daumens zum Drücken eines Tasters.

Die nachfolgend näher geschilderten Ausführungsbeispiele stellen bevorzugte Ausführungsformen der vorliegenden Erfindung dar.

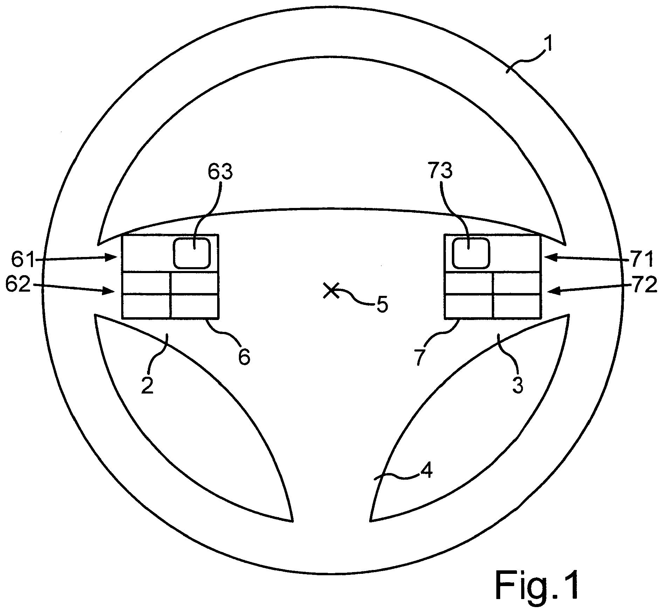

In Fig. 1 ist eine Skizze eines Lenkrads 1 in der Draufsicht dargestellt. Das Lenkrad 1 besitzt hier symbolisch drei Speichen 2, 3, 4. Darüber hinaus ist das Lenkrad 1 um eine Rotationsachse 5 drehbar. Die Rotationsachse 5 bildet die Achse einer nicht dargestellten Lenksäule.

Bei Geradeausfahrt verlaufen die beiden Speichen 2 und 3 in etwa horizontal. Sie beinhalten jeweils eine Betätigungsvorrichtung 6, 7, welche mit dem jeweiligen Daumen der rechten und linken Hand des Fahrers gut erreichbar ist. Jede Betätigungsvorrichtung 6, 7 beinhaltet ein oder mehrere Steuerungsmodule 61, 62 und 71, 72.

In dem Beispiel von Fig. 1 besitzt das jeweils erste Steuerungsmodul 61, 71 ein so genanntes "optisches Fingernavigationsmodul" bzw. OFN 63, 73. Die jeweils zweiten Steuerungsmodule 62, 72 sind hier symbolisch in vier Felder unterteilt, die beispielsweise weitere Steuerungselemente beinhalten. Die Einteilung der Bedienvorrichtungen 6 und 7 sind im vorliegenden Beispiel jedoch rein exemplarisch, und es können auch andere Einteilungen mit anderen Anzahlen an Steuerungsmodulen und Steuerungselementen vorgesehen sein.

Darüber hinaus sind die Betätigungsvorrichtungen 6, 7 bzw. ihre optischen Fingernavigationsmodule 63, 73 zueinander symmetrisch bezüglich einer Ebene durch die Rotationsachse 5 angeordnet. Die Ebene verläuft hier in Fig. 1 vertikal. Das Lenkrad muss aber nicht symmetrisch ausgebildet sein. Vielmehr kann auch nur eine Betätigungsvorrichtung 6 oder 7 vorhanden sein oder es kann nur eine von beiden Betätigungsvorrichtungen 6, 7 mit einem optischen Fingernavigationsmodul 63, 73 ausgestattet sein.

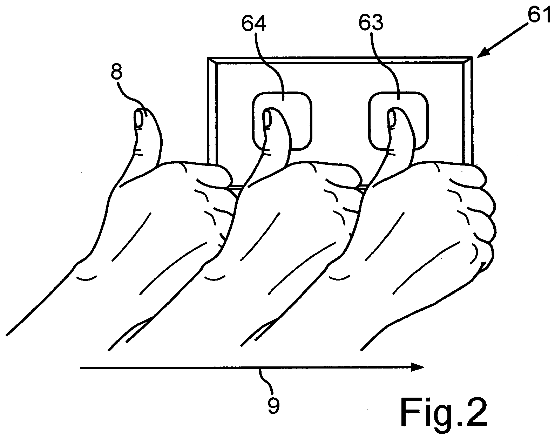

Besitzt beispielsweise das erste Steuerungsmodul 61 neben dem OFN-Modul 63 einen Taster 64 oder ein anderes mechanisches Bedien- oder Steuerungselement (z. B. Taster, Schalter etc.), so ergibt sich die in Fig. 2 dargestellte typische Daumenbewegung. Der Daumen 8 wandert, wenn das OFN-Modul 63 bezüglich der Rotationsachse 5 des Lenkrads 1 radial weiter innen liegt, d. h. einen geringeren Abstand zur Rotationsachse 5 besitzt als das Bedienelement 64 (hier auch als drittes Steuerungselement bezeichnet), von außen kommend entsprechend der mit einem Pfeil in Fig. 2 dargestellten Bewegungsrichtung 9 über das Bedienelement 64 zum OFN-Modul 63. Es erfolgt dabei ein Überstreichen des Bedienelements 64 und am Ende eine gewollte Bedienung (Wischen) über das berührungssensitive Bedienelement (hier OFN-Modul 63).

Wäre das berührungssensitive OFN-Modul 63 nicht innen liegend angeordnet (d. h. die Bedienelemente 63 und 64 wären vertauscht), so würde zum Bedienen des innen liegenden Bedienelements 64 das außen liegende berührungssensitive OFN-Modul vom Daumen 8 überstrichen, was eine Fehlbedienung auslösen würde. Es ist also vorteilhaft, wenn das berührungssensitive Bedienelement (OFN-Modul) am Lenkrad weiter innen liegt, da der Daumen zum Betätigen der Bedienelemente typischerweise von außen nach innen geführt wird.

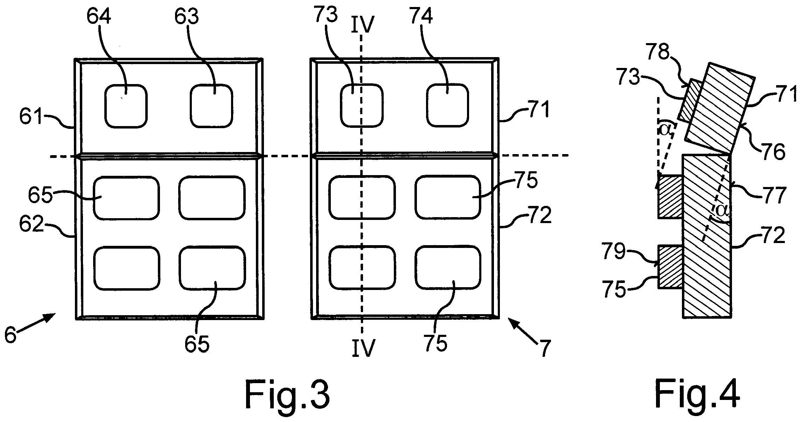

In Fig. 3 ist eine Draufsicht auf die Betätigungsvorrichtungen 6 und 7 dargestellt. Die jeweilige Bestückung mit Steuerungselementen ist wieder rein exemplarisch anzusehen. Wesentlich ist jedoch, dass eines oder beide der Betätigungsvorrichtungen 6, 7 in zwei Steuerungsmodule unterteilt ist: Ein erstes Steuerungsmodul 61 bzw. 71 und ein zweites Steuerungsmodul 62 bzw. 72. Aus Darstellungsgründen sind hier die beiden Betätigungsvorrichtungen 6 und 7 direkt nebeneinander gezeichnet.

Das erste Steuerungsmodul 61 der Betätigungsvorrichtung 6 besitzt hier neben dem OFN-Modul 63, das als erstes Steuerungselement anzusehen ist, beispielsweise einen Taster 64, der als drittes Steuerungselement betrachtet werden kann, wie in dem Beispiel von Fig. 2.

Das unmittelbar unter dem ersten Steuerungsmodul 61 angeordnete zweite Steuerungsmodul 62 besitzt hier vier weitere Steuerungselemente 65, die hier auch als Bedienelemente bezeichnet werden könnten, zur manuellen Bedienung durch den Fahrer.

Die Betätigungsvorrichtung 7 von Fig. 3 ist hier analog zu der Skizze von Fig. 1 symmetrisch bezüglich einer vertikal zwischen den beiden Betätigungsvorrichtungen 6 und 7 verlaufenden Ebene zu der Betätigungsvorrichtung 6 aufgebaut. Dementsprechend ist in dem ersten Steuerungsmodul 71 der rechten Betätigungsvorrichtung 7 das innen liegende OFN-Modul 73 und ein außen liegendes Bedien- bzw. Steuerungselement 74 vorgesehen. Das unter dem ersten Steuerungsmodul 71 vorgesehene zweite Steuerungsmodul 72 der rechten Betätigungsvorrichtung 7 ist ebenfalls mit vier Bedien- bzw. Steuerungselementen 75 ausgestattet, welche wiederum als Taster, Schalter oder dergleichen realisiert sein können.

In Fig. 3 ist eine Schnittlinie IV eingezeichnet. Der korrespondierende Schnitt ist in Fig. 4 dargestellt. Es ist zu erkennen, dass das erste Steuerungsmodul 71 in einer anderen Ebene angeordnet ist als das zweite Steuerungsmodul 72. Der Boden 76 des ersten Steuerungsmoduls 71 ist in einem vorbestimmten Winkel α (z. B. 10°, 20°, 30° etc.) gegenüber dem Boden 77 des zweiten Steuerungsmoduls 72 geneigt. Nachdem hier die Bedienfläche 78 des OFN-Moduls 73 parallel zu dem Boden 76 und die Bedienfläche 79 des Steuerungselements 75 parallel zu dem Boden 77 des zweiten Steuerungsmoduls 72 ist, sind auch die Bedienflächen 78 und 79 zueinander um den Winkel α geneigt. Wesentlich ist jedoch nur die Neigung der beiden Bedienflächen 78 und 79 zueinander, denn diese relative Neigung kann der Fahrer haptisch mit seinem Daumen erfassen. Es kann also auch das erste Steuerungsmodul 71 mit dem zweiten Steuerungsmodul 72 einteilig in einem Gehäuse mit gemeinsamem Boden integriert sein, und lediglich die Bedienflächen 78 und 79 sind in zwei verschiedenen zueinander geneigten Ebenen angeordnet. Aufgrund der Neigung zueinander kann der Fahrer dann das OFN-Modul 73 von den Steuerungselementen 75 unterscheiden, wodurch Fehlbedienungen verhindert werden.

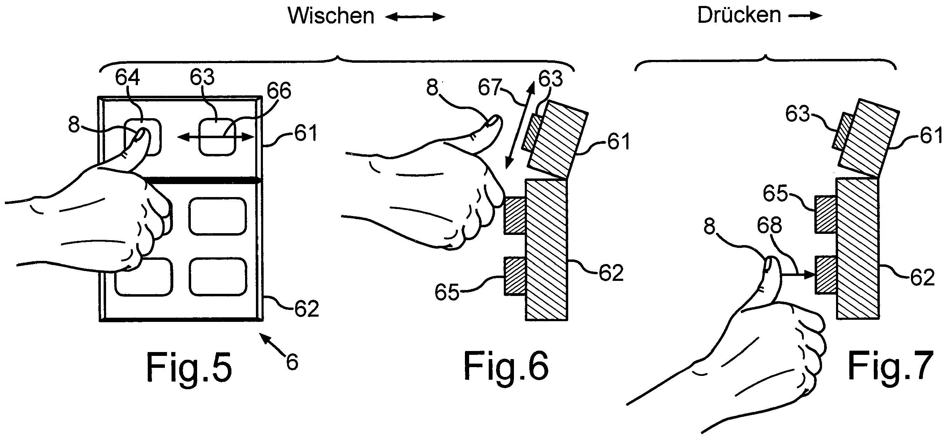

Aufgrund der geneigten Bedienfläche kann der Fahrer also mit seinem Daumen das erste Steuerungsmodul 61 bzw. 71 bzw. dessen Steuerungselemente haptisch zuverlässig orten. Wenn er darüber hinaus weiß, dass das innen liegende Steuerungselement des ersten Steuerüngsmoduls 61 ein OFN-Modul 63 ist, wird er zum Steuern oder Navigieren zuverlässig über dem OFN-Modul 63 gemäß Fig. 5 eine Wischbewegung 66 beispielsweise in radialer Richtung des Lenkrads ausführen. Alternativ kann der Fahrer gemäß Fig. 6 mit seinem Daumen 8 auch eine Wischbewegung 67 in Umfangsrichtung des Lenkrads, d. h. senkrecht zu der Wischbewegung 66, ausführen, um gewisse Steuerungen bzw. Navigationen auszuführen.

Da der Fahrer auch das zweite Steuerungsmodul 62 aufgrund der Neigung der Bedienflächen zuverlässig haptisch orten kann, kann er zielsicher auch eines der Bedienelemente bzw. Steuerungselemente 65 beispielsweise durch Drücken entsprechend der Drückbewegung 68 von Fig. 7 betätigen. Die Wahrscheinlichkeit einer Fehlbedienung ist also deutlich reduziert, da die Ebenen der Bedienflächen der ersten Steuerungsmodule 61, 71 und der zweiten Steuerungsmodule 62, 72 durch Neigung bewusst voneinander getrennt sind (vergleiche horizontal verlaufende gestrichelte Linie in Fig. 3). Er kann also die Funktionsinsel mit den Bedienelementen 63 und 64 klar von der Funktionsinsel mit den Bedienelementen 65 unterscheiden.

## Patentansprüche

1. Lenkrad (1) für ein Kraftfahrzeug mit
einem ersten und einem zweiten Steuerungsmodul (61, 62; 71, 72), wobei das erste Steuerungsmodul (61, 71) ein optisches Fingernavigationsmodul als ein erstes Steuerungselement (63, 73) aufweist,
das zweite Steuerungsmodul (62, 72) ein zweites Steuerungselement (75) aufweist, das erste Steuerungselement (63, 73) eine Bedienfläche (78) in einer ersten Ebene aufweist, und
das zweite Steuerungselement (75) eine Bedienfläche (79) in einer von der ersten Ebene verschiedenen, vorzugsweise in einer gegenüber der ersten Ebene geneigten zweiten Ebene aufweist,
**dadurch gekennzeichnet, dass**
das erste Steuerungsmodul (61, 71) ein dem ersten Steuerungsmodul nebengeordnetes drittes Steuerungselement (64, 74) aufweist, welches zu der Rotationsachse (5) des Lenkrads (1) einen größeren Abstand besitzt als das erste Steuerungselement (63, 73).

2. Lenkrad nach Anspruch 1, wobei das zweite Steuerungsmodul (62, 72) an dem Lenkrad (1) symmetrisch zu dem ersten Steuerungsmodul (61, 71) bezüglich einer Ebene durch die Rotationsachse (5) des Lenkrads (1) angeordnet ist.

3. Lenkrad nach einem der Ansprüche 1 oder 2, wobei das dritte Steuerungselement (64, 74) einen Taster umfasst.

4. Lenkrad nach einem der vorhergehenden Ansprüche, wobei jedes der Steuerungsmodule (61, 62; 71, 72) mehrere Steuerungselemente (63, 64, 65; 73, 74, 75) aufweist.

5. Lenkrad nach einem der vorhergehenden Ansprüche, wobei das erste Steuerungselement (63, 73) berührungssensitiv ist.

6. Lenkrad nach einem der vorhergehenden Ansprüche, wobei das erste Steuerungselement (63, 73) zum Erfassen einer Bewegung eines Fingers des Fahrers des Kraftfahrzeugs ausgebildet ist.

7. Kraftfahrzeug, das mit dem Lenkrad (1) nach einem der vorhergehenden Ansprüche ausgestattet ist.

## Claims

1. Steering wheel (1) for a motor vehicle, having a first and a second control module (61, 72; 71, 72), wherein
the first control module (61, 71) has an optical finger navigation module as a first control element (63, 73),
the second control module (62, 72) has a second control element (75),
the first control element (63, 73) has an operating surface (78) in a first plane, and
the second control element (75) has an operating surface (79) in a second plane, differing from the first plane, preferably being inclined relative thereto,
**characterised in that**
the first control module (61, 71) has a third control element (64, 74), which is coordinate with the first control module, which is at a greater distance from the axis of rotation of the steering wheel (1) than the first control element (63, 73).

2. Steering wheel according to claim 1, wherein the second control module (62, 72) is arranged on the steering wheel (1) symmetrically to the first control module (61, 71) with respect to a plane through the axis of rotation (5) of the steering wheel (1).

3. Steering wheel according to one of claims 1 or 2,
wherein the third control element (64, 74) has a push button.

4. Steering wheel according to one of the preceding claims, wherein each of the control modules (61, 62; 71, 72) has a plurality of control elements (63, 64, 65; 73, 74, 75).

5. Steering wheel according to one of the preceding claims, wherein the first control element (63, 73) is touch-sensitive.

6. Steering wheel according to one of the preceding claims, wherein the first control element (63, 73) is designed to detect a movement of a finger of the vehicle driver.

7. Motor vehicle equipped with the steering wheel (1) according to one of the preceding claims.

## Revendications

1. Volant de direction (1) pour un véhicule automobile comprenant un premier et un second module de direction (61, 62, 71, 72), le premier module de direction (61, 71) présentant un module optique de navigation à un doigt en tant que premier élément de commande (63, 73), le second module de commande (62, 72) présentant un deuxième élément de commande (75), le premier élément de commande (63, 73) présentant une surface de commande (78) dans un premier plan, et le deuxième élément de commande (75) présentant une surface de commande (79) dans un second plan différent du premier plan, de préférence incliné par rapport au premier plan, **caractérisé en ce que** le premier module de commande (61, 71) présente un troisième élément de commande (64, 74) adjacent au premier module de commande qui possède une distance supérieure par rapport à l'axe de rotation (5) du volant de direction (1) que celui du premier élément de commande (63, 73).

2. Volant de direction selon la revendication 1, le second module de commande (62, 72) étant disposé sur le volant de direction (1) symétriquement au premier module de commande (61, 71) par rapport à un plan à travers l'axe de rotation du volant de direction (1).

3. Volant de direction selon l'une quelconque des revendications 1 ou 2, le troisième élément de commande (64, 74) comprenant un bouton-poussoir.

4. Volant de direction selon l'une quelconque des revendications précédentes, chacun des modules de commande (61, 62, 71, 72) présentant plusieurs éléments de commande (63, 64, 65, 73, 74, 75).

5. Volant de direction selon l'une quelconque des revendications précédentes, le premier élément de commande (63, 73) étant tactile.

6. Volant de direction selon l'une quelconque des revendications précédentes, le premier élément de commande (63, 73) étant conçu pour détecter un mouvement d'un doigt du conducteur du véhicule automobile.

7. Véhicule qui est équipé du volant de direction (1) selon l'une quelconque des revendications précédentes.
